# EUROPÄISCHE PATENTSCHRIFT

(11) **EP 0 649 004 B1**
(45) Veröffentlichungstag und Bekanntmachung des Hinweises auf die Patenterteilung: **28.10.1998**
(21) Anmeldenummer: 94114344.8
(22) Anmeldetag: 13.09.1994
(51) Int. Cl.: G01D 5/48

(54) **Positionserfassungsvorrichtung an einem Linearantrieb**
Position determination device on a linear actuator
Actuateur linéaire avec dispositif de détermination de la position

(30) Priorität: 13.10.1993 DE 4334811
(43) Veröffentlichungstag der Anmeldung: 19.04.1995
(73) Patentinhaber: FESTO AG & Co, 73734 Esslingen (DE)
(72) Erfinder: Stoll, Kurt Dr., D-73732 Esslingen (DE); Volzer, Johannes, D-72535 Heroldstatt (DE); Hanisch, Christoph Dr., D-73734 Esslingen (DE)
(74) Vertreter: Abel, Martin, Dipl.-Ing.

(56) Entgegenhaltungen:
- EP-A- 0 363 517
- EP-A- 0 471 073
- WO-A-93/15378
- US-A- 4 071 818
- US-A- 5 050 135

## Beschreibung

Die Erfindung betrifft eine auf Ultraschallbasis arbeitende Positionserfassungsvorrichtung an einem Linearantrieb, zur Erfassung der Axialposition eines im Gehäuse eines Linearantriebes axial beweglich angeordneten Antriebselementes, mit einer im radialen Umfangsbereich des Antriebselementes gehäusefest angeordneten Sensoreinrichtung, die einen sich in Längsrichtung des Gehäuses erstreckenden Schallwellenleiter aus für Magnetostriktion geeignetem Material aufweist, der mit einer Auswerteeinrichtung kommuniziert, und mit einer einen Permanentmagneten enthaltenden Magnetanordnung, die innerhalb des Gehäuses derart mit dem Antriebselement verbunden ist, daß ihr Magnetfeld auf den momentan radial benachbarten Bereich des Schallwellenleiters einwirkt.

Auf Ultraschallbasis arbeitende Positionserfassungsvorrichtungen gehören als solche zum Stand der Technik, ihr Arbeitsprinzip ist z.B. in der US 3 898 555 beschrieben. Beim dortigen Ausführungsbespiel enthält das Meßsystem einen Draht, der konzentrisch in einem Röhrchen, dem sogenannten Schallwellen leiter, angeordnet ist, der aus magnetostriktivem Material besteht. Das Teil, dessen Position detektiert werden soll, ist mit einem Permanentmagneten verbunden, der sich längs des Schallwellenleiters bewegen kann. Ein durch den Draht hindurchgeschickter kurzer Stromstoß erzeugt ein wanderndes Magnetfeld, das lokal vom Magnetfeld des Permanentmagneten überlagert wird, so daß der Schallwellenleiter infolge Magnetostriktion eine mechanische Verspannung erfährt. Dadurch wird auf dem Schallwellenleiter eine Torsionswelle ausgelöst, die sich mit Schallgeschwindigkeit fortsetzt und am Ende des Schallwellenleiters in elektrische Impulse umgesetzt wird. Die Zeit zwischen dem Auftreten dieser elektrischen Impulse und dem anfänglichen Stromimpuls ermöglicht die Positionsbestimmung.

Ein mit einer solchen Positionserfassungsvorrichtung ausgestatteter Linearantrieb geht aus der EP 0 498 918 A1 hervor. Der Linearantrieb ist ein Arbeitszylinder, dessen vom Kolben gebildetes Antriebselement eine permanentmagnetische Magnetanordnung trägt, die von zwei beabstandeten Stabmagneten oder von einem Hufeisenmagneten gebildet ist. Die Anordnung ist so getroffen, daß zueinander beabstandete Polflächen radial orientiert sind und die austretenden Feldlinien unmittelbar auf den Schallwellenleiter gerichtet sind.

Die Auslegung der bekannten Magnetanordnung erfordert ziemlichen Aufwand. Nur dann, wenn das den Schallwellenleiter treffende Magnetfeld gewissen Kriterien hinsichtlich Dichte und Verlauf entspricht, ist eine zuverlässige Messung mit vernachlässigbarem Meßfehler möglich. Es bedarf daher bei unterschiedlichen Einsatzbedingungen - beispielsweise bei Einsätzen an Arbeitszylindern unterschiedlicher Größe - von Fall zu Fall bestimmt ausgewählter und angeordneter Permanentmagnetteile. Eine derart erfolgende Auslegung ist relativ umständlich, zeitaufwendig und wegen der Vielzahl unterschiedlicher Permanentmagnetteile relativ teuer.

Es ist die Aufgabe der vorliegenden Erfindung, eine Positionserfassungsvorrichtung für den Einsatz an einem Linearantrieb gemäß der eingangs genannten Art zu schaffen, die bei einfacherer und kostengünstigerer Auslegung der Magnetanordnung eine zuverlässige Positionsbestimmung ermöglicht.

Diese Aufgabe wird dadurch gelöst, daß ein Permanentmagnet der Magnetanordnung als axial polarisiertes, ring- oder scheibenförmiges Magnetteil ausgebildet ist, das so mit dem Antriebselement verbunden ist, daß seine beiden Polflächen axial ausgerichtet sind, und daß die Magnetanordnung ferner ein koaxial neben einer der Polflächen des Magnetteils angeordnetes, ring- oder scheibenförmiges Polteil umfaßt.

Auf diese Weise läßt sich bereits mit einem einzigen Permanentmagnetteil ein Magnetfeld mit einem Feldlinienverlauf schaffen, der eine zuverlässig und exakt auswertbare Betätigung der Sensoreinrichtung ermöglicht. Als Magnetteil kann ein standardisiertes Teil verwendet werden, das sich bei unterschiedlichen Einsatzbedingungen verwenden läßt. Die spezielle Anpassung an den jeweiligen Einsatzzweck erfolgt über das axial vorgeschaltete Polteil, das relativ preisgünstig ist, da es sich beispielsweise um ein einfaches ferromagnetisches Bauteil in Gestalt einer Stahlscheibe oder eines Stahlringes handeln kann. Die an der dem Polteil zugewandte Polfläche des ring- oder scheibenförmigen Magnetteils axial aus- oder eintretenden Feldlinien erfahren in dem Polteil eine Umlenkung, wobei durch die Ausgestaltung des Polteils der die Sensoreinrichtung erreichende Feldlinienanteil z.B. in Verlauf und Dichte wunschgemäß beeinflußt werden kann. Es bereitet keine Probleme, einen vorteilhaft steilen Gradienten der Feldstärke einzustellen.

Zwar geht aus der US-A-4 071 818 bereits eine Positionserfassungsvorrichtung hervor, bei der das bewegte Teil über eine Magneteinrichtung mit axial ausgerichteten Polflächen verfügt. Diese Polflächen befinden sich jedoch an zwei separaten Permanentmagneten, die eine L-förmige Gestalt haben und deren jeweils zweite Polfläche in radialer Richtung weist.

Die WO-A-93/15378 offenbart eine Positionserfassungsvorrichtung mit einem Permanentmagneten, der eine konkave Oberfläche aufweist, wobei allerdings über die Polarisierung nichts ausgesagt ist. Der Permanentmagnet sitzt innerhalb eines Gehäuses an einer Stange, die mit einem Bauteil koppelbar ist, dessen Position erfaßt werden soll.

Schließlich beschreibt die US-A-5,050,135 ebenfalls eine auf Magnetostriktion basierende Positionserfassungsvorrichtung, bei der allerdings das Magnetfeld durch eine oder mehrere elektromagnetische Spulen erzeugt wird.

Vorteilhafte Weiterbildungen der Erfindung sind in den abhängigen Ansprüchen aufgeführt.

Obwohl die Magnetanordnung in Bezug auf die Anzahl der Magnetteile und der Polteile prinzipiell keinen Beschränkungen unterliegt, wird außer einer Magnetanordnung, die lediglich ein einziges Magnetteil und ein einziges Polteil umfaßt, vor allem eine solche Magnetanordnung als vorteilhaft angesehen, die ein einziges Polteil und zwei Magnetteile enthält, wobei das Polteil an axial entgegengesetzten Seiten jeweils von einem der axial polarisierten ring- oder scheibenförmigen Permanentmagnetteile flankiert wird. Die Ausrichtung trifft man in diesem Falle vorzugsweise derart, daß sich Polflächen gleichnamiger Polarisierung gegenüberliegen. Auf diese Weise wird der magnetische Fluss beider Magnetteile in dem Polteil konzentriert radial nach außen gelenkt.

Wie sich gezeigt hat, liefert eine Magnetanordnung mit einem Polteil für die Auswertung ein Signal, das wesentlich weniger stark von Abstandsschwankungen zwischen der Magnetanordnung und dem Schallwellenleiter abhängt als bei einer polscheibenlosen Magnetanordnung.

Bei einer vorteilhaften Ausgestaltung ist die den Schallwellenleiter umfassende Sensoreinrichtung, die sich längsseits neben dem das Antriebselement aufnehmenden Gehäuseraum erstreckt, in einer kanalartigen Aufnahme untergebracht, die in die Gehäusewand des Linearantriebes integriert ist. Hierdurch ist gewährleistet, daß bei der Montage der Sensoreinrichtung automatisch der gewünschte exakte Abstand zur Magnetanordnung des Antriebsteils eingehalten wird. Die Montage und Ausrichtung ist also im Vergleich zu einer Anordnung, bei der die Sensoreinrichtung an der Außenseite des Zylindergehäuses angeordnet ist, erheblich vereinfacht. Auch ist es möglich, radial sehr nahe an den das Antriebselement aufnehmenden Gehäuseraum heranzurücken, so daß man schwächere und damit kostengünstigere Magnetteile verwenden kann. Diese Ausgestaltung ist im übrigen nicht nur bei der erfindungsgemäßen Magnetanordnung von Vorteil, sondern läßt sich auch im Zusammenhang mit auf beliebige andere Weise ausgestalteten Magnetanordnungen einsetzen, beispielsweise derjenigen, die in der EP 0 498 918 A1 beschrieben ist.

Nachfolgend wird die Erfindung anhand der beiliegenden Zeichnung näher erläutert. Es zeigen im einzelnen:
- Figur 1:: einen mit einer ersten Bauform der erfindungsgemäßen Positionserfassungsvorrichtung ausgestatteten Linearantrieb im Längsschnitt gemäß Schnittlinie I - I aus Figur 2,
- Figur 2:: einen Querschnitt durch den Linearantrieb aus Figur 1 gemäß Schnittlinie II - II, und
- Figur 3:: ein vergrößertes Detail des Linearantriebes aus Figur 1 im Bereich der Magnetanordnung, wobei strichpunktiert die optionale Verwendung eines zweiten Magnetteils angedeutet ist.

Bei dem abgebildeten Linearantrieb 1 handelt es sich um einen fluidisch und vorzugsweise pneumatisch angetriebenen Arbeitszylinder. Er hat ein Gehäuse 2, in dem ein länglicher Gehäuseraum 3 ausgebildet ist, der ein beim Ausführungsbeispiel von einem Kolben gebildetes Antriebselement 4 axial bewegbar geführt aufnimmt. An dem Antriebselement 4 ist ein beim Ausführungsbeispiel von einer Kolbenstange gebildetes stangenförmiges Übertragungselement 5 fest angebracht, welches den Gehäuseraum 3 koaxial durchzieht und wenigstens eine (6') der beiden stirnseitigen Abschlußwände 6, 6' des Gehäuses 2 nach außen hin durchsetzt. In der entsprechenden Durchbrechung der Abschlußwand 6' ist in an sich bekannter Weise eine Führungs- und/oder Dichtungsanordnung 7 für das Übertragungselement 5 angeordnet.

An dem Antriebselement 4 ist eine Dichtunganordnung 8 vorgesehen, die mit der radial orientierten Innenumfangsfläche 12 des Gehäuseraumes 3 dichtend zusammenarbeitet. Auf diese Weise ist der Gehäuseraum 3 axial in zwei beidseits des Antriebselements 4 angeordnete Arbeitsräume 10, 11 unterteilt, die mit in dem Gehäuse 2 verlaufenden Druckmittelkanälen 13 kommunizieren, um durch Zufuhr bzw. Abfuhr von Druckmittel eine gewünschte Bewegung des Antriebselements 4 in Richtung der Längsachse 14 des Gehäuseraumes 3 zu verursachen.

Der Linearantrieb 1 kann prinzipiell auch kolbenstangenlos ausgebildet sein, wobei dann andere übertragungselemente vorgesehen sind, um eine Bewegungskopplung zwischen dem Antriebselement 4 und einer außerhalb des Gehäuseraumes 3 angeordneten Kraftabnahme herzustellen.

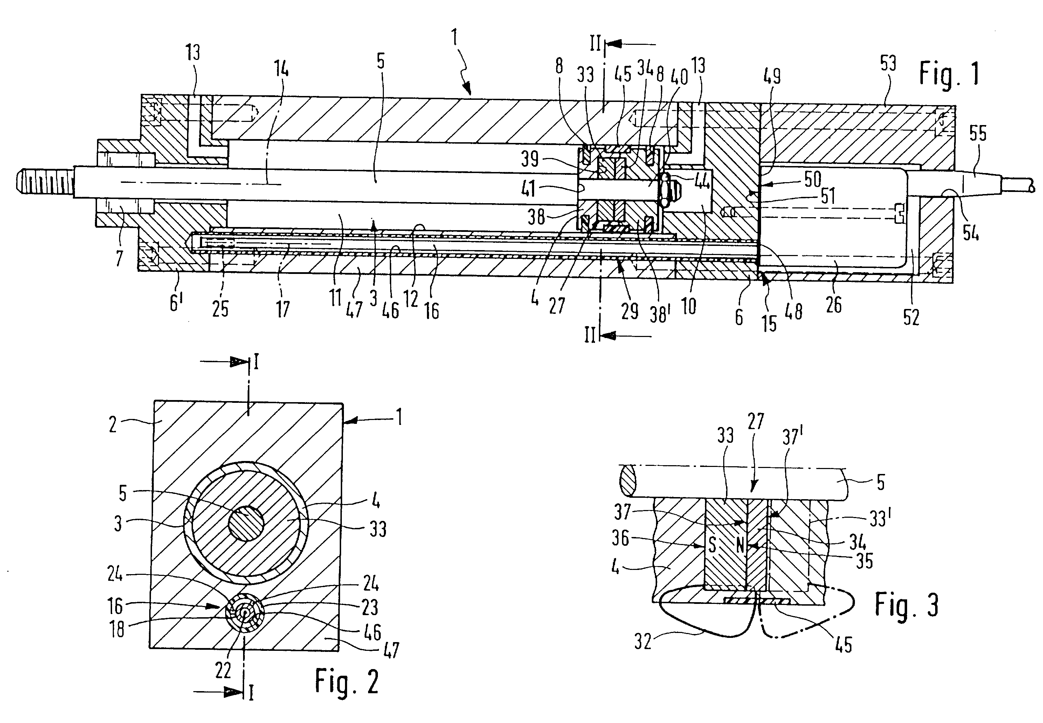

Das Gehäuse 2 des Linearantriebes 1 hat im Querschnitt gesehen zweckmäßigerweise eine rechteckige Außenkontur, wie dies aus Figur 2 hervorgeht. Die Innenkontur des Gehäuseraumes 3 und entsprechend die Außenkontur des Antriebselements 4 ist an sich beliebig, kann beispielsweise oval sein und ist vorzugsweise wie abgebildet kreisförmig.

Der Linearantrieb 1 ist mit einer allgemein mit 15 bezeichneten Positionserfassungsvorrichtung ausgestattet. Diese ermöglicht eine Bestimmung der momentanen Axialposition des Antriebselements 4, um auf diese Weise z.B. eine Folgesteuerung weiterer Einrichtungen zu ermöglichen. Mit Hilfe der Positionserfassungsvorrichtung 15 läßt sich jederzeit die aktuelle Position des Antriebselements 4 mit Bezug zum Gehäuse 2 erfassen. Gewährleistet wird diese Erfassungsmöglichkeit durch die besondere Ausgestaltung der Positionserfassungsvorrichtung, die praktisch ein Ultraschallwegmeßsystem darstellt. Solche Wegmeßsysteme sind als solches schon sehr lange Stand der Technik, eine ausführliche Beschreibung findet sich beispielsweise in der US 3 898 555. Abgesehen von der Anordnung und Ausgestaltung der noch zu erläuternden und zur Abtastung dienenden Magnetanordnung kann die erfindungsgemäße Positionserfassungsvorrichtung 15 den gleichen Aufbau wie die in der US 3 898 555 beschriebene haben. Eine detaillierte Erläuterung erübrigt sich daher an dieser Stelle, man kann sich auf die Grundlagen beschränken.

Die beispielsgemäße Positionserfassungsvorrichtung 15 verfügt über eine insgesamt stabähnliche Sensoreinrichtung 16, die im Bereich radial außerhalb des Gehäuseraumes 3 am Gehäuse 2 festgelegt ist. Sie ist so ausgerichtet, daß ihre Längsachse 17 zu derjenigen (14) des Gehäuseraumes 3 parallel verläuft. Sie erstreckt sich über die gesamte Hublänge des Antriebselements 4 und daher vorzugsweise zumindest über die gesamte Länge des Gehäuseraumes 3, den sie radial außen flankiert. Wie in Figur 2 angedeutet, umfaßt die Sensoreinrichtung 16 ein rohrförmiges Teil, den sogenannten Schallwellenleiter 18, der aus magnetostriktivem Material besteht. Es handelt sich also um einen Stoff, der unter Einfluß eines Magnetfeldes z.B. eine Querschnitts- und Längenänderung erfährt und insbesondere ferromagnetisch ist. Seine Längsachse fällt mit der Längsachse 17 zusammen. Konzentrisch innerhalb des röhrchenförmigen Schallwellenleiters 18 erstreckt sich ein z.B. von einem Draht gebildeter elektrischer Leiter 22. Radial außerhalb des Schallwellenleiters 18 ist zweckmäßigerweise noch ein zu letzterem koaxial angeordnetes und insbesondere ebenfalls rohrförmiges Schutzgehäuse 23 vorgesehen, welches unmagnetisch ist und vorzugsweise aus Kunststoffmaterial besteht. Es schützt die aus Schallwellenleiter 18 und elektrischem Leiter 22 bestehende Einheit vor Beschädigungen. Der radiale Spalt zwischen dem Schallwellenleiter 18 und dem diesen konzentrisch umgebenden Schutzgehäuse 23 kann mittels Querstegen 24 überbrückt sein, die eine exakte Zentrierung in dem Schutzgehäuse 23 bewirken.

An dem einen stirnseitigen Endbereich der Sensoreinrichtung 16 ist eine gestrichelt angedeutete Dämpfungsstrecke 25 für Schallwellen angeordnet. Die entgegengesetzte axiale Stirnseite der Sensoreinrichtung 16 steht mit einer Auswerteeinrichtung 26 in Verbindung.

Zur Positionserfassungsvorrichtung 15 gehört desweiteren eine sich im Gehäuseraum 3 befindende Magnetanordnung 27, die mit dem Antriebselement 4 mitbewegbar verbunden und insbesondere unmittelbar an dem Antriebselement angebracht ist. Sie dient als Indikator der Sensoreinrichtung 16 und liefert zusammen mit dem Stromimpuls das den Wiedemanneffekt hervorrufende Magnetfeld, von dem in Figur 3 eine Feldlinie 32 repräsentativ angedeutet ist. Das Magnetfeld der Magnetanordnung 27 strahlt radial nach außen ab und durchsetzt dabei den Schallwellenleiter 18. Die Position dieses Durchsetzungsbereiches 29 verlagert sich axial entsprechend der axialen Verlagerung des Antriebselements 4.

Im Betrieb wird von der Auswerteeinrichtung 26 ein Stromimpuls durch den elektrischen Leiter 22 hindurchgeschickt. Er erzeugt ein mit nahezu Lichtgeschwindigkeit axial wanderndes zirkulares Magnetfeld, das auch in dem Schallwellenleiter 18 verläuft. Erreicht dieses Magnetfeld den erwähnten Durchsetzungsbereich 29, erzeugt die Überlagerung des zirkularen Magnetfeldes des Stromes und des Feldes der permantentmagnetischen Magnetanordnung 27 in dem Durchsetzungsbereich infolge Magnetostriktion eine mechanische Verspannung des Schallwellenleiters 18. Dieser Effekt ist als Wiedemann-Effekt bekannt. Als Resultat wird auf dem Schallwellenleiter eine Torsionswelle ausgelöst, die den Schallwellenleiter mit Schallgeschwindigkeit durchläuft, und zwar ausgehend vom Durchsetzungsbereich 29 in beide axiale Richtungen. Die eine Torsionswelle wird in der Dämpfungsstrecke 25 bis auf ein erträgliches Maß gedämpft (Echosignal wird verringert). Die andere läuft in Richtung zur Auswerteinrichtung 26 und wird am Ende des Schallwellenleiters 18 in einem Wandler, wie er beispielsweise in der US 3 898 555 beschrieben ist, in einen Stromimpuls umgewandelt. Aus einer in der Auswerteeinrichtung 26 erfolgenden Zeitmessung zwischen der Startzeit des Eingangs-Stromimpulses und dem Eintreffzeitpunkt des resultierenden Ausgangs-Stromimpulses läßt sich die Position der Magnetanordnung 27 und damit diejenige des Antriebselementes 4 und einer gegebenenfalls an dem übertragungselement 5 angebrachten und zu bewegenden Last bestimmen.

Die beim Ausführungsbeispiel vorhandene und bevorzugt verwendete Magnetanordnung 27 umfaßt ein einziges permanentmagnetisches ringförmiges Magnetteil 33 sowie ein einziges, aus ferromagnetischem Material bestehendes ringförmiges Polteil 34, das an einer Axialseite des Magnetteils 33 angeordnet ist. Das ringförmige Magnetteil 33 ist axial polarisiert, so daß seine beiden in Axialrichtung weisenden Stirnflächen zwei Polflächen 35, 36 mit entgegengesetzter Polarisierung bilden. Die Polflächen 35, 36 verlaufen also jeweils in einer Ebene rechtwinkelig zur Längsachse 14. Das Polteil 34 ist koaxial mit Bezug zum Magnetteil 33 angeordnet, wobei seine eine axiale Stirnfläche 37 der einen Polfläche 35 zugewandt ist, bevorzugt liegt die Stirnfläche 37 an der zugewandten Polfläche 35 ohne Zwischenraum unmittelbar an.

Als zweckmäßig hat es sich erwiesen, das Polteil 34 an derjenigen Polfläche 35 anzuordnen, an der sich der Nordpol N des ringförmigen dauermagnetischen Magnetteils 33 befindet.

Die Magnetanordnung 27 ist zweckmäßigerweise insgesamt eine kreiszylindrische Anordnung, wobei das Magnetteil 33 und das Polteil 34 jeweils einen kreisförmig konturierten Außenumfang besitzen, wobei die Außendurchmesser beider Teile vorzugsweise identisch sind. Die Magnetanordnung 27 ist im übrigen auch vorzugsweise koaxial mit Bezug zum Gehäuseraum 3 angeordnet, so daß ihre Längsachse mit der Längsachse 14 zusammenfällt.

Aus der vergrößerten Darstellung gemäß Figur 3 ist zu entnehmen, daß die Feldlinien 32 des von dem Magnetteil 33 erzeugten Maggnetfeldes durch das anschließende Polteil 34 einseitig radial nach außen gelenkt werden und dabei im Bereich des radialen Außenumfanges des Polteils 34 im wesentlichen senkrecht zu der Außenumfangsfläche des Polteils 34 gerichtet sein können. Dadurch treten die Feldlinien 32 an der radial gegenüberliegenden Stelle der Sensoreinrichtung 16 relativ steil in den Schallwellenleiter ein. Auch die Feldliniendichte ist dort releativ hoch. Im Gegensatz dazu erfolgt der Eintritt der von der entgegengesetzten polteillosen Polfläche 36 ausgehenden Feldlinienabschnitte erheblich weniger steil und relativ spitzwinkelig mit Bezug zur Längsachse 17, so daß sich insgesamt ein sehr ausgeprägter Feldlinienverlauf einstellt, der ein zuverlässig erfaßbares Schallwellensignal erzeugt. Die Positionsbestimmung kann sehr exakt erfolgen, da die Genauigkeit von eventuellen Abstandsschwankungen zwischen der Magnetanordnung und dem Schallwellenleiter kaum beeinträchtigt wird.

Durch das vorgeschaltete Polteil 34 ist also die Möglichkeit gegeben, den Feldlinienverlauf zu beeinflussen und dem Bedarf entsprechend auszurichten. Variationsmöglichkeiten sind beispielsweise Dicke, Durchmesser oder Materialauswahl des Polteils. Man hat auf diese Weise die Möglichkeit, die Anpassung der Magnetanordnung an die unterschiedlichen Gegebenheiten des jeweiligen Linearantriebes über die geeignete Auswahl des Polteils vorzunehmen, das sich relativ kostengünstig herstellen läßt, wobei man als Magnetteil auf Standardteile zurückgreift, die man nicht von Fall zu Fall in spezieller Ausgestaltung anfertigen muß.

Eine ebenfalls vorteilhaft arbeitende Variante der Magnetanordnung 27 ist noch in Figur 3 angedeutet. Bei dieser Variante ist zusätzlich ein zweites ringförmiges und dauermagnetisches Magnetteil 33' vorgesehen (strichpunktiert eingezeichnet), das sich an der der axialen Stirnfläche 37 axial entgegengesetzten Stirnfläche 37' des Polteils 34 befindet. Das Polteil 34 ist dadurch axial beidseits von jeweils einem Magnetteil 33, 33' flankiert, die vorzugsweise so ausgerichtet sind, daß ihre Polflächen mit gleichnamiger Polarisierung einander zugewandt sind. Beispielsgemäß wird das Polteil 34 beidseits unmittelbar von Nordpolflächen flankiert.

Das Polteil und ein jeweiliges Magnetteil sind beim Ausführungsbeispiel jeweils einstückig ausgebildet. Es versteht sich jedoch, daß jeweils auch eine mehrteilige Ausführungsform möglich ist, beispielsweise indem relativ dünne lamellenartige Teile aufeinandergeschichtet werden.

Desweiteren kann es sich bei den vorhandenen Pol- und Magnetteilen 34, 33, 33' von Fall zu Fall auch um ungelochte Scheibenteile handeln, auch Kombinationen von Ring- und Scheibenteilen sind möglich. Die Ringgestalt, die man je nach den Gegebenheiten auch als Lochscheibengestalt bezeichnen könnte, hat im vorliegenden Falle unter anderem den Vorteil einer einfachen Zentrierung und Lagerung am Antriebselement 4.

Das Antriebselement 4 selbst besteht aus unmagnetischem, nicht magnetisierbarem Material wie Aluminium oder Kunststoff. Auch das Übertragungselement 5 sollte möglichst nicht oder nur gering magnetisierbar sein. Die Magnetanordnung 27 ist beim Ausführungsbeispiel vollständig in das Antriebselement 4 eingebettet und allseits von diesem umschlossen ist. Einerseits ist die Magnetanordnung dadurch gut geschützt, andererseits wird verhindert, daß eventuelle metallische Partikel der Magnetanordnung auf die die Lauffläche für das Antriebselement 4 bildende Innenumfangsfläche 12 gelangen und einen Verschleiß verursachen.

Das Antriebselement 4 umfaßt vorliegend zwei axial aufeinanderfolgend angeordnete Bestandteile bzw. Kolbenanteile 38, 38', die fest zusammengehalten werden. Im Innern des Antriebselements 4 befindet sich ein Aufnahmeraum 39, in dem die Magnetanordnung 27 angeordnet ist, die koaxial auf einen Endabschnitt 40 des Übertragungselements 5 aufgeschoben ist. Im getrennten Zustand der beiden Bestandteile 38 ist der Aufnahmeraum 39 zur Montage oder Demontage der Magnetanordnung 27 offen. Den Zusammenhalt der Anordnung gewährleistet ein endseitig auf das Übertragungselement 5 aufgeschraubtes Befestigungselement 44, das die Gesamtanordnung des Antriebselements 4 gegen eine Ringstufe 41 des Übertragungselements 5 spannt.

Zweckmäßigerweise ist vorgesehen, daß im Falle einer Magnetanordnung 27 mit wie vorliegend einem einzigen Polteil 34 letzteres axial mittig im Antriebselement 4 angeordnet ist.

Im Bereich der Trennstelle zwischen den beiden Bestandteilen 38 kann am Außenumfang des Antriebselements 4 ein Gleitring 45 vorgesehen sein, der für eine relativ verschleißfreie Zusammenarbeit mit der Innenumfangsfläche 12 sorgt.

Ein weiterer Vorteil der beispielsgemäßen Positionserfassungsvorrichtung 15 ergibt sich aus der Art der Anbringung der stab- oder stangenähnlichen Sensoreinrichtung 16. Es sind Maßnahmen getroffen, die dafür sorgen, daß die Sensoreinrichtung 16 nur in vorbestimmten Ausrichtungen mit Bezug zum Gehäuseraum 3 angeordnet werden kann, so daß bei der Erstmontage und auch im Falle eines notwendig gewordenen Austausches keine problematischen Justieraufgaben zu bewältigen sind. Diese nachfolgend beschriebenen Maßnahmen sind bei der zuvor erläuterten beispielsgemäßen Magnetanordnung 27 besonders vorteilhaft, doch lassen sie sich auch im Zusammenhang mit jedweder sonstigen Ausgestaltung der Magnetanordnung 27 einsetzen.

Die erwähnten Maßnahmen bestehen im wesentlichen darin, daß die Sensoreinrichtung nicht am Außenumfang des Gehäuses 2 angeordnet, sondern in einer kanalähnlich ausgebildeten Aufnahme 46 aufgenommen ist, die in die Wand 47 des Gehäuses 2 integriert ist. Die Aufnahme 46 befindet sich also innerhalb der Gehäusewand 47 des Linearantriebes 1, so daß sich eine starre, unveränderliche Zuordnung zu dem das Antriebselement 4 mit der Magnetanordnung 27 aufnehmenden Gehäuseraum 3 ergibt. Die Querschnittskontur der Aufnahme 46 ist an diejenige der Sensoreinrichtung 16 - vorliegend an diejenige des Schutzgehäuses 23 - angepaßt, so daß die Sensoreinrichtung 16 in Querrichtung der Aufnahme 46 praktisch spielfrei aufgenommen ist. Um dies zu gewährleisten, ist es am einfachsten, die Konturen der Aufnahme 46 und der Sensoreinrichtung 16 komplementär zueinander auszubilden. Wird die Sensoreinrichtung 16 in die Aufnahme 46 eingesteckt, ergibt sich somit automatisch der vorbestimmte und gewünschte Radialabstand zur Magnetanordnung 27.

Es versteht sich, daß die Sensoreinrichtung 16 zweckmäßigerweise lösbar in die zugeordnete Aufnahme 46 einsteckbar ist. Daher ist die Aufnahme 46 beim Ausführungsbeispiel im Bereich zumindest einer Stirnseite offen, wobei die öffnung eine Einstecköffnung 48 bildet, über die die Steckmontage oder die Entnahme der Sensoreinrichtung 16 erfolgt. An der entgegengesetzten Stirnseite kann die Aufnahme 46 wie abgebildet geschlossen sein.

Um auch eine stets reproduzierbare Einstecktiefe der Sensoreinrichtung 16 zu gewährleisten, sind vorzugsweise zusätzliche Begrenzungsmittel 49 vorgesehen, die die Einstecktiefe vorgeben. Sie sind beispielsgemäß gebildet von einer neben der Einstecköffnung 48 angeordneten gehäusefesten Fläche 50 und einer mit dieser zusammenarbeitenden Bauteilfläche 51 der Auswerteeinrichtung 26, die in axial starrer Verbindung mit der Sensoreinrichtung 16 steht. Besagte Fläche 50 kann insbesondere eine dem Gehäuseraum 3 axial entgegengesetzte Stirnfläche des Gehäuses 2 und insbesondere der zugordneten

Abschlußwand 6 sein, wie dies beim Ausführungsbeispiel der Fall ist. Hier befindet sich auch die Einstecköffnung 48 an besagter Stirnfläche der Abschlußwand 6. Diese Abschlußwand 6 ist zweckmäßigerweise diejenige, die vom Übertragungselement 5 nicht durchsetzt wird. Auch im Einsatz des Linearantriebes 1 ist daher ein ungefährliches Auswechseln der Sensoreinrichtung 16 möglich, da nur an der Rückseite des Linearantriebes 1 zu manipulieren ist.

Die stirnseitig an das Gehäuse 2 anschließende Auswerteeinrichtung 26 ist zweckmäßigerweise in einem Schutzraum 52 untergebracht, der sich beispielsgemäß vollständig in einem Schutzgehäuse 53 befindet, das stirnseitig an das Gehäuse 2 insbesondere lösbar angesetzt ist. Die äußere Querschnittskontur des Schutzgehäuses 53 stimmt vorzugsweise mit derjenigen des Gehäuses 2 zusammen, so daß sich durchgehend eine einheitliche Kontur einstellt.

Zum Anschluß an eine Stromversorgung oder eine weitere über- oder nebengeordnete Auswerteeinheit verfügt das Schutzgehäuse 53 über eine Wanddurchbrechung 54, die die Durchführung eines mit der Auswerteeinrichtung 26 verbundenen Kabels 55 gestattet. An Stelle des direkten Kabelanschlusses kann vorzugsweise auch eine lösbare Steckverbindung erfolgen. So kann z. B. eine erste Leitungsanordnung zwischen der Auswerteeinrichtung 26 und einer am Schutzgehäuse 53 vorgesehenen internen Steckverbindungseinrichtung vorgesehen sein, die ihrerseits mit einer weiteren externen Leitungsanordnung lösbar verbindbar ist, welche zu der Auswerteeinheit geführt werden kann. Jede Leitungsanordnung kann als flexibles Kabel ausgeführt sein.

Das Gehäuse 3 ist vorzugsweise als Strangpreßteil ausgebildet, in das bei der Fertigung die Aufnahme 46 unmittelbar eingeformt wird. Bevorzugt handelt es sich um ein Aluminium - Strangpreßprofilteil. Auf diese Weise erübrigt sich eine aufwendige Nacharbeit, z. B. Tieflochbohren. Auch kann man auf diese Weise noch andere erforderliche Kanäle mit einbringen.

## Patentansprüche

1. Auf Ultraschallbasis arbeitende Positionserfassungsvorrichtung (15) an einem Linearantrieb (1), zur Erfassung der Axialposition eines im Gehäuse (2) eines Linearantriebes (1) axial beweglich angeordneten Antriebselementes (4), mit einer im radialen Umfangsbereich des Antriebselementes (4) gehäusefest angeordneten Sensoreinrichtung (16), die einen sich in Längsrichtung des Gehäuses (2) erstreckenden Schallwellenleiter (18) aus für Magnetostriktion geeignetem Material aufweist, der mit einer Auswerteeinrichtung (26) kommuniziert, und mit einer einen Permanentmagneten enthaltenden Magnetanordnung (27), die innerhalb des Gehäuses (2) derart mit dem Antriebselement (4) verbunden ist, daß ihr Magnetfeld (32) auf den momentan radial benachbarten Bereich des Schallwellenleiters (18) einwirkt, dadurch gekennzeichnet, daß ein Permanentmagnet der Magnetanordnung (27) als axial polarisiertes, ring- oder scheibenförmiges Magnetteil (33) ausgebildet ist, das so mit dem Antriebselement (4) verbunden ist, daß seine beiden Polflächen (35, 36) axial ausgerichtet sind, und daß die Magnetanordnung (27) ferner ein koaxial neben einer der Polflächen (35) des Magnetteils (33) angeordnetes, ring- oder scheibenförmiges Polteil (34) umfaßt.

2. Vorrichtung nach Anspruch 1, dadurch gekennzeichnet, daß ein Polteil (34) der Magnetanordnung (27) koaxial beidseits von einem jeweils axial polarisierten ring- oder scheibenförmigen permanentmagnetischen Magnetteil (33, 33') flankiert ist, wobei die beiden Magnetteile (33, 33') so angeordnet sind, daß ihre Polflächen mit gleichnamiger Polarisierung einander zugewandt sind.

3. Vorrichtung nach Anspruch 1 oder 2, dadurch gekennzeichnet, daß das Polteil (34) auf der Seite der Nordpolfläche (35) eines jeweiligen Magnetteils (33, 33') angeordnet ist.

4. Vorrichtung nach einem der Ansprüche 1 bis 3, dadurch gekennzeichnet, daß die Magnetanordnung (27) zumindest teilweise in das Antriebselement (4) eingebettet ist.

5. Vorrichtung nach Anspruch 4, dadurch gekennzeichnet, daß die Magnetanordnung (27) vollständig von dem Antriebselement (4) umschlossen ist.

6. Vorrichtung nach Anspruch 5, dadurch gekennzeichnet, daß das Antriebselement (4) zwei axial aufeinanderfolgend angeordnete Bestandteile (38) hat, die einen Aufnahmeraum (39) begrenzen, der die Magnetanordnung (27) aufnimmt.

7. Vorrichtung nach einem der Ansprüche 1 bis 6, dadurch gekennzeichnet, daß die ring- oder scheibenförmigen Teile (33, 33', 34) der Magnetanordnung (27) unmittelbar aneinander anliegen.

8. Vorrichtung nach einem der Ansprüche 1 bis 7, dadurch gekennzeichnet, daß der Linearantrieb (1) ein Arbeitszylinder und das Antriebselement (4) dessen Kolben ist.

9. Vorrichtung nach einem der Ansprüche 1 bis 8, dadurch gekennzeichnet, daß die längsseits neben dem das Antriebselement (4) aufnehmenden Gehäuseraum (3) angeordnete Sensoreinrichtung (16) in einer in die Wand (47) des Gehäuses (2) des Linearantriebes (1) integrierten und parallel zur Gehäuselängsachse (14) verlaufenden kanalartigen Aufnahme (46) angeordnet ist.

10. Vorrichtung nach Anspruch 9, dadurch gekennzeichnet, daß das Gehäuse (3) als Strangpreßprofilteil ausgebildet ist, das vorzugsweise aus Aluminiummaterial besteht.

11. Vorrichtung nach Anspruch 9 oder 10, dadurch gekennzeichnet, daß die kanalartige Aufnahme (46) an wenigstens einer Stirnseite unter Bildung einer Einstecköffnung (48) für die Sensoreinrichtung (16) offen ist.

12. Vorrichtung nach einem der Ansprüche 9 bis 11, dadurch gekennzeichnet, daß die Auswerteeinrichtung (26) in einem sich axial an die kanalartige Aufnahme (46) anschließenden Schutzraum (52) untergebracht ist.

13. Vorrichtung nach Anspruch 12, dadurch gekennzeichnet, daß sich der Schutzraum (52) zumindest teilweise in einem axial an das Gehäuse (2) des Linearantriebes (1) angesetzten Schutzgehäuse (53) befindet.

## Claims

1. A position sensing device (15) operating on an ultrasonic basis on a linear drive (1), for detecting the axial position of an axially-movable drive element (4) mounted in the casing (2) of a linear drive (1), with a sensor device (16) attached firmly to the casing in the radial peripheral area of the drive element (4) and having an acoustic waveguide (18) of material suitable for magnetostriction extending in the longitudinal direction of the casing (2) and communicating with an analysis unit (26), and with a magnet assembly (27) containing permanent magnets and linked to the drive element (4) within the casing (2) in such a way that its magnetic field (32) acts on the momentarily radially adjacent area of the acoustic waveguide (18), characterized in that one permanent magnet of the magnet assembly (27) is in the form of an axially-polarized, annular or disc-shaped magnet element (33), so linked to the drive element (4) that its two pole surfaces (35, 36) are axially aligned, and that the magnet assembly (27) also encompasses an annular or disc-shaped pole element (34) located coaxially alongside one of the pole surfaces (35) of the magnet element (33).

2. Device according to claim 1, characterized in that a pole element (34) of the magnet assembly (27) is flanked coaxially on either side by an axially-polarized annular or disc-shaped permanently-magnetic magnet element (33, 33'), with the two magnet elements (33, 33') being so arranged that their pole surfaces face one another with like polarity.

3. Device according to claim 1 or 2, characterized in that the pole element (34) is located on the side of the north pole surface (35) of each magnet element (33, 33').

4. Device according to any of claims 1 to 3, characterized in that the magnet assembly (27) is at least partly embedded in the drive element (4).

5. Device according to claim 4, characterized in that the magnet assembly (27) is completely encompassed by the drive element (4).

6. Device according to claim 5, characterized in that the drive element (4) has two axially-consecutive elements (38) bounding a mounting space (39) which accommodates the magnet assembly (27).

7. Device according to any of claims 1 to 6, characterized in that the annular or disc-shaped elements (33, 33', 34) of the magnet assembly (27) are directly adjacent to one another.

8. Device according to any of claims 1 to 7, characterized in that the linear drive (1) is an operating cylinder, and the drive element (4) is its piston.

9. Device according to any of claims 1 to 8, characterized in that sensor device (16) located on the long side next to the casing area (3) accommodating the drive element (4) is mounted in a channel-like recess (46) integral with the wall (47) of the casing (2) of the linear drive (1) and running parallel to the longitudinal axis (14) of the casing.

10. Device according to claim 9, characterized in that the casing (3) is in the form of an extruded section, preferably of aluminium.

11. Device according to claim 9 or 10, characterized in that the channel-like recess (46) is open at one or more end faces to form an insertion opening (48) for the sensor device (16).

12. Device according to any of claims 9 to 11, characterized in that the analysis unit (26) is accommodated in a protected space (52) axially adjoining the channel-like recess (46).

13. Device according to claim 12, characterized in that the protected space (52) is located at least partially in a protective enclosure (53) attached axially to the casing (2) of the linear drive (1).

## Revendications

1. Dispositif de détection de position (15), fonctionnant sur la base d'ultrasons, pour un dispositif d'entraînement linéaire (1), destiné à détecter la position axiale d'un élément d'entraînement (4) monté mobile axialement dans le boîtier (2) d'un dispositif d'entraînement linéaire (1), avec un dispositif à capteur (16), monté solidairement avec le boîtier, dans la zone périphérique radiale de l'élément d'entraînement (4), lequel dispositif à capteur comporte un guide d'ondes acoustiques (18), s'étendant dans la direction longitudinale du boîtier (2) fait d'un matériau convenant à la magnétostriction, qui communique avec un dispositif d'exploitation (26), et avec un dispositif à aimant (27) incluant un aimant permanent, qui, à l'intérieur du boîtier (2), est relié avec l'élément d'entraînement (4) de manière que son champ magnétique (32) agisse sur la zone momentanément radialement voisine du guide d'ondes acoustiques (18), caractérisé en ce qu'un aimant permanent du dispositif à aimant (27) est conformé en élément magnétique (33) annulaire ou en forme de disque, polarisé axialement, qui est relié avec l'élément d'entraînement (4) de manière que ses deux surfaces polaires (35, 36) soient orientées axialement, et en ce que le dispositif à aimant (27) comprend en outre un élément polaire (34) annulaire ou en forme de disque, disposé coaxialement à côté de l'une des surfaces polaires (35).

2. Dispositif selon la revendication 1, caractérisé en ce qu'un élément polaire (34) du dispositif à aimant (27) est encadré coaxialement, de part et d'autre, par un élément magnétique (33, 33') à magnétisme permanent, annulaire ou en forme de disque, polarisé axialement, les deux éléments magnétiques (33, 33') étant disposés de manière que leurs surfaces polaires de polarisation de même nom soient tournées l'une vers l'autre.

3. Dispositif selon la revendication 1 ou 2, caractérisé en ce que l'élément polaire (34) est disposé sur le côté de la surface polaire nord (35) de chaque élément magnétique (33, 33').

4. Dispositif selon l'une des revendications 1 à 3, caractérisé en ce que le dispositif à aimant (27) est noyé au moins partiellement dans l'élément d'entraînement (4).

5. Dispositif selon la revendication 4, caractérisé en ce que le dispositif à aimant (27) est totalement enfermé par l'élément d'entraînement (4).

6. Dispositif selon la revendication 5, caractérisé en ce que l'élément d'entraînement (4) possède deux composants (38), disposés axialement l'un derrière l'autre, qui délimitent un espace formant logement (39), qui loge le dispositif à aimant (27).

7. Dispositif selon l'une des revendication 1 à 6, caractérisé en ce que les éléments (33, 33', 34) annulaires ou en forme de disque du dispositif à aimant (27) s'appliquent directement l'un contre l'autre.

8. Dispositif selon l'une des revendications 1 à 7, caractérisé en ce que le dispositif d'entraînement linéaire (1) est un vérin et l'élément d'entraînement (4), son piston.

9. Dispositif selon l'une des revendications 1 à 8, caractérisé en ce que le dispositif à capteur (16) disposé longitudinalement à côté de la chambre intérieure (3) du boîtier logeant l'élément d'entraînement (4), est disposé dans un logement (46) du genre canal, intégré dans la paroi (47) du boîtier (2) du dispositif d'entraînement linéaire (1) et s'étendant parallèlement à l'axe longitudinal (14) du boîtier.

10. Dispositif selon la revendication 9, caractérisé en ce que le boîtier (3) est conformé en élément profilé extrudé, qui est de préférence réalisé dans un matériau à base d'aluminium.

11. Dispositif selon la revendication 9 ou 10, caractérisé en ce que le logement (46) du genre canal est ouvert au moins sur un côté frontal, en formant une ouverture d'introduction (48) pour le dispositif à capteur (16).

12. Dispositif selon l'une des revendications 9 à 11, caractérisé en ce que le dispositif d'exploitation (26) est logé dans un volume de protection (52), se raccordant axialement au logement (46) du genre canal.

13. Dispositif selon la revendication 12, caractérisé en ce que le volume de protection (52) se trouve au moins en partie dans un boîtier de protection (53), rapporté axialement sur le boîtier (2) du dispositif d'entraînement linéaire (1).
